# EUROPÄISCHE PATENTANMELDUNG

(11) **EP 2 093 259 A1**
(43) Veröffentlichungstag der Anmeldung: **26.08.2009**
(21) Anmeldenummer: 08003158.6
(22) Anmeldetag: 21.02.2008
(51) Int. Cl.: C09B 67/40, C08K 3/22, C08K 3/00, C08G 18/08, C08G 18/48, C08G 18/28, C08L 75/04

(54) **Verwendung von Polyurethanen als Pigment-Dispergatoren für wässrige Systeme**

(71) Anmelder: Cognis IP Management GmbH, 40589 Düsseldorf (DE)
(72) Erfinder: Schieferstein, Ludwig, 40882 Ratingen (DE); Pietsch, Oliver, 45481 Mülheim (DE)

(57) **Zusammenfassung**

Polyurethanen, die erhältlich sind durch Umsetzung von (a) ein oder mehreren, mindestens difunktionellen, Isocyanaten und (b) ein oder mehreren organischen Verbindungen, die mindestens eine ethoxilierte OH-, NH-, SH- oder COOH-Gruppe enthalten, mit der Maßgabe, dass pro Molekül mindestens eine freie OH-Gruppe vorhanden sein muß, wobei die Maßgabe gilt, dass die Verbindungen a) und b) im Äquivalentverhältnis NCOₐ₎ : OH_{b)} von 1 : (1,15 bis 2,05) eingesetzt werden, eignen sich als Pigmentdispergatoren für wäßrige Systeme.

## Beschreibung

### Gebiet der Erfindung

Die Erfindung betrifft die Verwendung spezieller Polyurethane als Pigment-Dispergatoren für wäßrige Systeme.

### Stand der Technik

Zur Dispergierung feinverteilter Farbpigmente in wäßrigen Beschichtungszubereitungen werden wasserverträgliche Polymere mit Molekulargewichten im Bereich von 2000 bis 40 000 Dalton eingesetzt, die Carboxyl- und/oder Ammoniumgruppen enthalten. Zur Steigerung von Wirksamkeit und Spezifizität können in diesen Polymeren weitere Gruppen wie Glykol- oder Ethyleniminoligomere sowie aromatische Ringsysteme oder Alkylketten enthalten sein.

Mehrfunktionelle Isocyanate sind bestens geeignet, mehrere Bausteine, sofern sie acide Wasserstoffatome enthalten, wie etwa Alkohole oder Amine, über die Addition dieser aciden X-H-Bindungen an ihre Isocyanatgruppen zu definierten Kombinationsprodukten zusammenzubauen. Wenn die H-acide Verbindung ein Alkohol ist, resultieren so Urethangruppen (-O-CO-NH-) enthaltende Moleküle, wenn die H-acide Verbindung ein Amin ist, resultieren Harnstoffgruppen (-NH-CO-NH-) enthaltende Moleküle. Sowohl Urethan- als auch Harnstoffgruppen zeigen eine im Vergleich zu Estergruppen stark verbesserte Hydrolysestabilität.

### Beschreibung der Erfindung

Es war die Aufgabe der vorliegenden Erfindung neue Pigment-Dispergiermittel für wäßrige Systeme bereitzustellen.
Gegenstand der Erfindung ist die Verwendung von Polyurethanen als Pigment-Dispergatoren für wäßrige Systeme, wobei diese Polyurethane erhältlich sind durch Umsetzung von (a) ein oder mehreren, mindestens difunktionellen, Isocyanaten und (b) ein oder mehreren organischen Verbindungen, die mindestens eine ethoxilierte OH-, NH-, SH- oder COOH-Gruppe enthalten, mit der Maßgabe, dass pro Molekül mindestens eine freie OH-Gruppe vorhanden sein muß,
wobei folgende Maßgabe gilt: die Verbindungen a) und b) werden im Äquivalentverhältnis NCOₐ₎ : OH_{b)} von 1 : (1,15 bis 2,05) eingesetzt.

Ein weiterer Erfindungsgegenstand ist die Verwendung von Polyurethanen als Pigment-Dispergatoren für wäßrige Systeme, wobei diese Polyurethane erhältlich sind durch Umsetzung von
(a) ein oder mehreren, mindestens difunktionellen, Isocyanaten,
(b) ein oder mehreren organischen Verbindungen, die mindestens eine ethoxilierte OH-, NH-, SH- oder COOH-Gruppe enthalten, mit der Maßgabe, dass pro Molekül mindestens eine freie OH-Gruppe vorhanden sein muß, und
(c) ein oder mehreren - von (a) und (b) verschiedenen - Verbindungen, die mindestens eine gegenüber Isocyanaten reaktive funktionelle Gruppe mit Zerewitinoff-aktivem Wasserstoff (ZH) enthalten,
   wobei folgende Maßgaben gelten:
   (i) die Verbindungen a) und b) werden im Äquivalentverhältnis NCOₐ₎ : OH_{b)} von 1 : (1,15 bis 2,05) eingesetzt,
   (ii) die Verbindungen a) und c) werden im Äquivalentverhältnis NCOₐ₎ : ZH_{c)} von 1 : 1 eingesetzt,
   (iii) die Verbindungen a), b) und c) werden im Äquivalentverhältnis NCOₐ₎ : Summe (OR_{b)} +ZH_{c)}) von mindestens 1,05 : 1 eingesetzt.

Der Begriff des Äquivalents ist dem Fachmann auf dem hier in Rede stehenden Gebiet der Polyurethanchemie geläufig und bezieht sich auf die zur Verfügung stehenden reaktiven Gruppen in den miteinander umzusetzenden Verbindungen. Allgemein ausgedrückt ist das Äquivalentverhältnis das Zahlenverhältnis definierter reaktiver Gruppen in den eingesetzten Reaktanden.

### Zu den Bausteinen a)

Als mindestens difunktionelle Isocyanate (a) sind alle mehrfunktionellen aromatischen, alicyclischen und aliphatischen Isocyanate geeignet. Vorzugweise enthalten die geeigneten mehrfunktionellen Isocyanate im Mittel 2 bis höchstens 4 NCO- Gruppen. Diisocyanate sind als Verbindungen (a) bevorzugt.

Beispielsweise seien als geeignete Isocyanate genannt 1,5- Naphthylendiisocyanat, 4,4'-Diphenylmethandiisocyanat (MDI), hydriertes MDI (H₁₂MDI), Xylylendiisocyanat (XDI), Tetramethylxyloldiisocyanat (TMXDI), 4,4'- Diphenyldimethylmethandiisocyanat, Di- und Tetraalkyldiphenylmethandiisocyanat, 4,4'-Dibenzyldiisocyanat, 1,3-Phenylendiisocyanat, 1,4- Phenylendiisocyanat, die Isomeren des Toluylendiisocyanats (TDI), gegebenenfalls in Mischung, 1-Methyl-2,4-diisocyanato-cyclohexan, 1,6- Diisocyanato-2,2,4-trimethylhexan, 1,6-Diisocyanato-2,4,4-trimethylhexan, 1-Isocyanatomethyl-3-isocyanato-1,5,5-trimethyl-cyclohexan, chlorierte und bromierte Diisocyanate, phosphorhaltige Diisocyanate, 4,4'- Diisocyanatophenylperfluorethan, Tetramethoxybutan-1,4-diisocyanat, Butan- 1,4-diisocyanat, Hexan-1,6-diisocyanat (HDI), Dicyclohexylmethandiisocyanat, Cyclohexan-1,4-diisocyanat, Ethylen- diisocyanat, Phthalsäure-bis-isocyanatoethylester, ferner Polyisocyanate mit reaktionsfähigen Halogenatomen, wie 1-Chlormethylphenyl-2,4-diisocyanat, 1-Brommethylphenyl-2,6-diisocyanat, 3,3-Bis-chlormethylether-4,4'-diphenyldiisocyanat. Schwefelhaltige Polyisocyanate erhält man beispielsweise durch Umsetzung von 2 mol Hexamethylendiisocyanat mit 1 mol Thiodiglykol oder Dihydroxydihexylsulfid. Weitere wichtige Diisocyanate sind Trimethylhexamethylendiisocyanat, 1,4-Diisocyanatobutan, 1,2-Diisocyanatododecan und Dimerfettsäure-diisocyanat. Interesse verdienen teilweise verkappte Polyisocyanate, welche die Bildung selbstvernetzender Polyurethane ermöglichen, z.B. dimeres Toluylendiisocyanat, oder mit beispielsweise Phenolen, tertiärem Butanol, Phthalimid, Caprolactam partiell umgesetzte Polyisocyanate.

Erfindungsgemäß bevorzugt ist es, dass die zur Herstellung der Polyurethane eingesetzten Isocyanate (a) zumindest überwiegend Isophorondiisocyanat (IPDI) und/oder Tetramethylxyloldiisocyanat (TMXDI) enthalten. Vorzugsweise wird Komponente (a) ausschließlich gewählt aus der Gruppe Isophorondiisocyanat (IPDI) und Tetramethylxyloldiisocyanat (TMXDI).

In einer bevorzugten Ausführungsform werden Isocyanate mit einer Funktionalität von 2 (difunktionelle Isocyanate) eingesetzt.

In einer anderen Ausführungsform werden - anteilsweise oder ganz - Isocyanate mit einer Funktionalität oberhalb von 2 eingesetzt, wenn nämlich gewünscht ist, Polyurethane mit verzweigter Struktur herzustellen.

### Zu den Bausteinen b)

Wie bereits ausgeführt handelt es sich bei Koomponente (b) um organische Verbindungen, die mindestens eine ethoxilierte OH-, NH-, SH- oder COOH-Gruppe enthalten, mit der Maßgabe, dass pro Molekül mindestens eine freie OH-Gruppe vorhanden sein muß.

Als Verbindungen (b) sind beispielsweise die Polymerisationprodukte des Ethylenoxids, deren Misch- oder Pfropfpolymerisationsprodukte sowie die durch Kondensation von mehrwertigen Alkoholen oder Mischung derselben und die durch Ethoxylierung von mehrwertigen Alkoholen, Amiden, Polyamiden und Aminoalkoholen gewonnenen Polyether geeignet. Beispiele geeigneter Verbindungen (b) sind etwa Polyethylenglykole, Anlagerungsprodukte von Ethylenoxid an Trimethylolpropan und EO-PO-Blockcopolymere.

Bevorzugte Verbindungen (b) sind Polyetherpolyole. Dies sind solche hydrophilen Polyole (a), die pro Molekül mindestens zwei OH-Gruppen und mindestens zwei Funktionen -O- (Ethergruppen) enthalten. Diese Polyetherpolyole sind in aller Regel so stark hydrophil, dass sie wasserlöslich sind.
Zur Herstellung der erfindungsgemäßen Polyurethane eignen sich bevorzugt solche Polyetherpolyole, die zumindestens überwiegend Polyethylenglykol enthalten. Besonders gute Ergebnisse werden erzielt, wenn diese Polyethenglykole einen mittleren Gehalt an Alkoxyeinheiten im Bereich von 20 bis 400 aufweisen. Bevorzugt sind als Verbindungen (b) Diole der allgemeinen Formel HO-(CH₂-CH₂-O)ₓ-H, wobei x die Werte 30 bis 300 annehmen kann. Hierbei handelt es sich um Polyethylenglykole, die Kondensationsprodukte des Ethylenoxids mit Ethylenglykol oder Wasser darstellen. Vorzugsweise stellt man das Molgewicht dieser Polyethylenglykole auf Werte im Bereich von 2000 bis 20.000 ein. Polyethylenglykole mit einem Molgewicht im Bereich von 4.000 bis 10.000 sind als Verbindungen (b) besonders bevorzugt.

### Zu den Bausteinen c)

Wie bereits gesagt handelt es ich bei Komponente (c) um - von (a) und (b) verschiedene - Verbindungen, die mindestens eine gegenüber Isocyanaten reaktive funktionelle Gruppe mit Zerewitinoff-aktivem Wasserstoff (ZH) enthalten.

Bekanntlich bezeichnet man an N, O oder S gebundenen Wasserstoff dann als Zerewitinoff-aktiven Wasserstoff (manchmal auch nur als "aktiven Wasserstoff'), wenn er nach einem von Zerewitinoff aufgefundenen Verfahren durch Umsetzung mit Methylmagnesiumjodid Methan liefert. Typische Beispiele für Verbindungen mit Zerewitinoff-aktivem Wasserstoff sind Verbindungen, die Carboxyl-, Hydroxyl-, Amino-, Imino- oder Thiol-Gruppen als funktionelle Gruppen enthalten.

In einer Ausführungsform weist das Grundgerüst der Moleküle der Verbindungen (c) im wesentlichen hydrophoben Charakter auf, d.h. es verfügt im wesentlichen über einen Kohlenwasserstoffrest, der aliphatisch oder aromatisch-aliphatisch sein kann. Vorzugsweise ist das Grundgerüst der Moleküle der Verbindungen (c) aliphatisch, wobei es dann gesättigt oder ungesättigt, linear oder verzweigt sein kann.

Die Verbindungen (c) können neben der gegenüber NCO reaktiven funktionellen Gruppe, die den Zerewitinoff-aktiven Wasserstoff enthält, zusätzlich ein oder zwei weitere polare Gruppen pro Molekül enthalten. Diese polaren Gruppen können ihrerseits funktionelle Gruppen mit Zerewitinoff-aktivem Wasserstoff sein, aber auch Gruppen wie -Cl, -F oder -Br.

In einer Ausführungsform weisen die Verbindungen (c) neben ihrer gegenüber Isocyanaten reaktiven OH-Gruppe ein oder zwei weitere polare Gruppen auf, die sich gegenüber Isocyanaten inert verhalten. Erfindungsgemäß ist bevorzugt, dass als zusätzliche polare Gruppen Ether-, Ester-, Amid- und/oder Oxazolin-Gruppen vorhanden sind - unter der Voraussetzung, dass es sich dabei um ein oder zwei solcher Gruppen pro Molekül handelt. Beispiele hierfür sind Ricinoloxazolin und Ricinusfettsäuremethylester.

Die Verbindungen (c) enthalten vorzugsweise 6 bis 24 Kohlenstoffatome pro Molekül. Vorzugsweise enthalten diese Verbindungen als funktionelle Gruppe ausschließlich eine gegenüber NCO reaktive funktionellen Gruppe, die den Zerewitinoff-aktiven Wasserstoff, enthält. Beispiele hierfür sind Alkohole, Carbonsäuren und Amine mit 6 bis 24 Kohlenstoffatomen pro Molekül.

In einer Ausführungsform setzt man hydrophobe Alkohole (nachfolgend auch als Hydrophobalkohole bezeichnet), die pro Molekül zwingend eine gegenüber NCO-Gruppen reaktive OH-Gruppe enthalten müssen, als Verbindungen (c) ein. Vorzugsweise enthalten die hydrophoben Alkohole dabei insgesamt 6 bis 24 Kohlenstoffatome pro Molekül. Es ist auch möglich, dass die hydrophoben Alkohole über die zwingend pro Molekül vorhandene gegenüber NCO reaktive OH-Gruppe hinaus zusätzlich ein oder zwei OH-Gruppen enthalten. Beispiel hierfür sind alpha,beta-Diole, wie sie beispielsweise durch Umsetzung von alpha-Olefinen mit Persäuren und anschließende Ringöffnung der dabei erhaltenen Oxirane mit Wasser zugänglich sind.

Besonders bevorzugt werden als Hydrophobalkohole (c) Alkohole mit 6 bis 24 C-Atomen, insbesondere 8 bis 20 C-Atomen, pro Molekül eingesetzt. Diese Alkohole können gesättigt oder ungesättigt, linear oder verzweigt sein. Fettalkohole und Oxoalkohole des genannten Kettenlängenbereichs sind besonders bevorzugt. Ganz besonders bevorzugt sind lineare gesättigte Alkohole mit 8 bis 20 C-Atomen pro Molekül, die einzeln oder als Gemisch eingesetzt werden können.

In einer Ausführungsform setzt man Dimethylolpropionsäure als Verbindung (c) ein. In diesem Zusammenhang sei ausdrücklich festgestellt, dass deren Carboxylproton wegen starker sterischer Hinderung (die Carboxylgruppe sitzt an einem quartären C-Atom) unter normalen Reaktionsbedingungen (also auch mit den üblichen Reaktionsbeschleunigern katalysiert) mit Isocyanat nicht reagiert. Daher zählen bei Dimethylolpropionsäure nur die OH-Gruppen als Zerewitinoff-aktive Gruppen (ZH).

### Polyurethane mit den Bausteinen a) und b)

In einer Ausführungsform gilt für die Bedingung (i): Die Verbindungen a) und b) werden im Äquivalentverhältnis NCOₐ₎ : OH_{b)} von 1 : (1,25 bis 2,05), vorzugsweise von 1 : (1,50 bis 2,05) und insbesondere von von 1 : (1,75 bis 2,05) eingesetzt.

### Polyurethane mit den Bausteinen a), b) und c)

### I.

In einer Ausführungsform gilt: Im Hinblick auf die Bedingung (i) werden die Verbindungen a) und b) im Äquivalentverhältnis NCOₐ₎ : OH_{b)} von 1 : (1,15 bis 2,05) eingesetzt - dabei gilt im Hinblick auf die Bedingung (iii): die Verbindungen a), b) und c) werden im Äquivalentverhältnis NCOₐ₎ : Summe (OH_{b)} +ZH_{c)}) von mindestens 1,05 : 1 eingesetzt.

In einer Ausführungsform gilt: Im Hinblick auf die Bedingung (i) werden die Verbindungen a) und b) im Äquivalentverhältnis NCOₐ₎ : OH_{b)} von 1 : (1,15 bis 2,05) eingesetzt - dabei gilt im Hinblick auf die Bedingung (iii): die Verbindungen a), b) und c) werden im Äquivalentverhältnis NCOₐ₎ : Summe (OH_{b)} +ZH_{c)}) von mindestens 1,20 : 1 eingesetzt.
In einer Ausführungsform gilt: Im Hinblick auf die Bedingung (i) werden die Verbindungen a) und b) im Äquivalentverhältnis NCOₐ₎ : OH_{b)} von 1 : (1,15 bis 2,05) eingesetzt - dabei gilt im Hinblick auf die Bedingung (iii): die Verbindungen a), b) und c) werden im Äquivalentverhältnis NCOₐ₎ : Summe (OH_{b)} +ZH_{c)}) von mindestens 1,40 : 1 eingesetzt.
In einer Ausführungsform gilt: Im Hinblick auf die Bedingung (i) werden die Verbindungen a) und b) im Äquivalentverhältnis NCOₐ₎ : OH_{b)} von 1 : (1,15 bis 2,05) eingesetzt - dabei gilt im Hinblick auf die Bedingung (iii): die Verbindungen a), b) und c) werden im Äquivalentverhältnis NCOₐ₎ : Summe (OH_{b)} +ZH_{c)}) von mindestens 1,60 : 1 eingesetzt.

### II.

In einer Ausführungsform gilt: Im Hinblick auf die Bedingung (i) werden die Verbindungen a) und b) im Äquivalentverhältnis NCOₐ₎ : OH_{b)} von 1 : (1,25 bis 2,05) eingesetzt - dabei gilt im Hinblick auf die Bedingung (iii): die Verbindungen a), b) und c) werden im Äquivalentverhältnis NCOₐ₎ : Summe (OH_{b)} +ZH_{c)}) von mindestens 1,05 : 1 eingesetzt.
In einer Ausführungsform gilt: Im Hinblick auf die Bedingung (i) werden die Verbindungen a) und b) im Äquivalentverhältnis NCOₐ₎ : OH_{b)} von 1 : (1,25 bis 2,05) eingesetzt - dabei gilt im Hinblick auf die Bedingung (iii): die Verbindungen a), b) und c) werden im Äquivalentverhältnis NCOₐ₎ : Summe (OH_{b)} +ZH_{c)}) von mindestens 1,20 : 1 eingesetzt.
In einer Ausführungsform gilt: Im Hinblick auf die Bedingung (i) werden die Verbindungen a) und b) im Äquivalentverhältnis NCOₐ₎ : OH_{b)} von 1 : (1,25 bis 2,05) eingesetzt - dabei gilt im Hinblick auf die Bedingung (iii): die Verbindungen a), b) und c) werden im Äquivalentverhältnis NCOₐ₎ : Summe (OH_{b)} +ZH_{c)}) von mindestens 1,40 : 1 eingesetzt.
In einer Ausführungsform gilt: Im Hinblick auf die Bedingung (i) werden die Verbindungen a) und b) im Äquivalentverhältnis NCOₐ₎ : OH_{b)} von 1 : (1,25 bis 2,05) eingesetzt - dabei gilt im Hinblick auf die Bedingung (iii): die Verbindungen a), b) und c) werden im Äquivalentverhältnis NCOₐ₎ : Summe (OH_{b)} +ZH_{c)}) von mindestens 1,60 : 1 eingesetzt.

### III.

In einer Ausführungsform gilt: Im Hinblick auf die Bedingung (i) werden die Verbindungen a) und b) im Äquivalentverhältnis NCOₐ₎ : OH_{b)} von 1 : (1,50 bis 2,05) eingesetzt - dabei gilt im Hinblick auf die Bedingung (iii): die Verbindungen a), b) und c) werden im Äquivalentverhältnis NCOₐ₎ : Summe (OH_{b)} +ZH_{c)}) von mindestens 1,05 : 1 eingesetzt.

In einer Ausführungsform gilt: Im Hinblick auf die Bedingung (i) werden die Verbindungen a) und b) im Äquivalentverhältnis NCOₐ₎ : OH_{b)} von 1 : (1,50 bis 2,05) eingesetzt - dabei gilt im Hinblick auf die Bedingung (iii): die Verbindungen a), b) und c) werden im Äquivalentverhältnis NCOₐ₎ : Summe (OH_{b)} +ZH_{c)}) von mindestens 1,20 : 1 eingesetzt.
In einer Ausführungsform gilt: Im Hinblick auf die Bedingung (i) werden die Verbindungen a) und b) im Äquivalentverhältnis NCOₐ₎ : OH_{b)} von 1 : (1,50 bis 2,05) eingesetzt - dabei gilt im Hinblick auf die Bedingung (iii): die Verbindungen a), b) und c) werden im Äquivalentverhältnis NCOₐ₎ : Summe (OH_{b)} +ZH_{c)}) von mindestens 1,40 : 1 eingesetzt.
In einer Ausführungsform gilt: Im Hinblick auf die Bedingung (i) werden die Verbindungen a) und b) im Äquivalentverhältnis NCOₐ₎ : OH_{b)} von 1 : (1,50 bis 2,05) eingesetzt - dabei gilt im Hinblick auf die Bedingung (iii): die Verbindungen a), b) und c) werden im Äquivalentverhältnis NCOₐ₎ : Summe (OH_{b)} +ZH_{c)}) von mindestens 1,60 : 1 eingesetzt.

### IV.

In einer Ausführungsform gilt: Im Hinblick auf die Bedingung (i) werden die Verbindungen a) und b) im Äquivalentverhältnis NCOₐ₎ : OH_{b)} von 1 : (1,75 bis 2,05) eingesetzt - dabei gilt im Hinblick auf die Bedingung (iii): die Verbindungen a), b) und c) werden im Äquivalentverhältnis NCOₐ₎ : Summe (OH_{b)} +ZH_{c)}) von mindestens 1,05 : 1 eingesetzt.
In einer Ausführungsform gilt: Im Hinblick auf die Bedingung (i) werden die Verbindungen a) und b) im Äquivalentverhältnis NCOₐ₎ : OH_{b)} von 1 : (1,75 bis 2,05) eingesetzt - dabei gilt im Hinblick auf die Bedingung (iii): die Verbindungen a), b) und c) werden im Äquivalentverhältnis NCOₐ₎ : Summe (OH_{b)} +ZH_{c)}) von mindestens 1,20 : 1 eingesetzt.
In einer Ausführungsform gilt: Im Hinblick auf die Bedingung (i) werden die Verbindungen a) und b) im Äquivalentverhältnis NCOₐ₎ : OH_{b)} von 1 : (1,75 bis 2,05) eingesetzt - dabei gilt im Hinblick auf die Bedingung (iii): die Verbindungen a), b) und c) werden im Äquivalentverhältnis NCOₐ₎ : Summe (OH_{b)} +ZH_{c)}) von mindestens 1 ,40 : 1 eingesetzt.
In einer Ausführungsform gilt: Im Hinblick auf die Bedingung (i) werden die Verbindungen a) und b) im Äquivalentverhältnis NCOₐ₎ : OH_{b)} von 1 : (1,75 bis 2,05) eingesetzt - dabei gilt im Hinblick auf die Bedingung (iii): die Verbindungen a), b) und c) werden im Äquivalentverhältnis NCOₐ₎ : Summe (OH_{b)} +ZH_{c)}) von mindestens 1,60 : 1 eingesetzt.

### Zu den Pigmenten

Die Art der Pigmente ist an sich nicht kritisch, d.h. es können an sich beliebige feste Pigmente eingesetzt werden. Vorzugsweise handelt es sich um anorganische Pigmente. Beispiele hierfür sind die Oxide des Titans, des Eisens und des Chroms.

### Beispiele

### Eingesetzte Substanzen:

Disponil LS500: Anlagerungsprodukt von 50 mol Ethylenoxid pro mol Laurylalkohol (Fa. Cognis); Lorol C12: Dodecanol (Fa. Cognis); VE-Wasser = vollentsalztes Wasser

### Beispiel 1 (erfindungsgemäß)

100,2 g Disponil LS500 (50mmol), 9,4 g Lorol C12 (50 mmol) und 13,4 g Dimethylolpropionsäure (100 mmol) wurden gemischt und zusammen mit 242,9 g Triethylenglykoldimethylether in einen 500-ml-Vierhalskolben gegeben. Die Apparatur wurde zweimal evakuiert und mit Stickstoff belüftet. Anschließend wurde Vakuum angelegt, auf 60°C erhitzt und zwei Stunden bei einem Druck von 10 mbar entwässert. Dann wurde mit Stickstoff belüftet und im weiteren Verlauf die Schutzgasatmosphäre durch eine leichten Stickstoffstrom aufrechterhalten. Der Ansatz wurde während der gesamten Reaktionszeit bei 120 Upm (Umdrehungen pro Minute) gerührt. Dann wurden 38,9 Isophorondiisocyanat (von Fa. Hüls) (175 mmol) zugegeben. Es wurde eine Probe für die NCO-Bestimmung gezogen. Der NCO-Startwert betrug 3,63% (Theorie: 3,63%). Die Reaktionstemperatur wurde für zwei Stunden bei 60°C gehalten. Nach Ablauf dieser Zeit betrug der NCO-Wert 1,55 % und die Reaktionstemperatur wurde auf 120 °C erhöht. Nach weiteren vier Stunden bei 120 °C war der NCO-Wert auf unter 0,02% gefallen und die Reaktionsmischung wurde auf Raumtemperatur (20 °C) abgekühlt. Der Ansatz wurde mit 134,9 g entmineralisiertem Wasser verdünnt und durch Zugabe von 3,78 g 2-Amino-2-methylpropanol-1 zur einer klaren dünnflüssigen Lösung neutralisiert.

### Test der Dispergierwirksamkeit

Zu 4,2 g Polymerlösung gemischt mit 22,1 g VE-Wasser (die Mischung enthielt 5 % Polyurethan) wurden portionsweise 67,1 g Titandioxidpigment Kronos CL 2310 gegeben und jeweils mit einem Dispermaten eingearbeitet.

Die insgesamt homogen noch einarbeitbare Pigmentmenge wurde zu 98,2 g bestimmt.

### Beispiel 2 (zum Vergleich)

100,2 g Disponil LS500 (50mmol), 9,4 g Lorol C12 (50 mmol) und 13,4 g Dimethylolpropionsäure (100 mmol) wurden gemischt und zusammen mit 234,5 g Triethylenglykoldimethylether in einen 500-ml-Vierhalskolben gegeben. Die Apparatur wurde zweimal evakuiert und mit Stickstoff belüftet. Anschließend wurde Vakuum angelegt, auf 60°C erhitzt und zwei Stunden bei einem Druck von 10 mbar entwässert. Dann wurde mit Stickstoff belüftet und im weiteren Verlauf die Schutzgasatmosphäre durch eine leichten Stickstoffstrom aufrechterhalten. Der Ansatz wurde während der gesamten Reaktionszeit mit 120 Upm gerührt. Dann wurden 33,3 g Isophorondiisocyanat (von Fa. Hüls) (150 mmol) zugegeben. Es wurde eine Probe für die NCO-Bestimmung gezogen. Der NCO-Startwert betrug 3,21% (Theorie: 3,22%). Die Reaktionstemperatur wurde für zwei Stunden bei 60°C gehalten. Nach Ablauf dieser Zeit betrug der NCO-Wert 1,55 % und die Reaktionstemperatur wurde auf 120 °C erhöht. Nach weiteren vier Stunden bei 120 °C war der NCO-Wert auf unter 0,02% gefallen und die Reaktionsmischung wurde auf Raumtemperatur abgekühlt. Der Ansatz wurde mit 134,9 g entmineralisiertem Wasser verdünnt und durch Zugabe von 3,78 g 2-Amino-2-methylpropanol-1 zur einer klaren dünnflüssigen Lösung neutralisiert.

### Test der Dispergierwirksamkeit

Zu 4,2 g Polymerlösung gemischt mit 22,1 g VE-Wasser (die Mischung enthielt 5 % Polyurethan) wurden portionsweise 67,1 g Titandioxidpigment Kronos CL 2310 gegeben und jeweils mit einem Dispermaten eingearbeitet.
Die insgesamt homogen noch einarbeitbare Pigmentmenge wurde zu 106,5 g bestimmt.

## Patentansprüche

1. Verwendung von Polyurethanen als Pigment-Dispergatoren für wäßrige Systeme,
wobei diese Polyurethane erhältlich sind durch Umsetzung von
(a) ein oder mehreren, mindestens difunktionellen, Isocyanaten und
(b) ein oder mehreren organischen Verbindungen, die mindestens eine ethoxilierte OH-, NH-, SH- oder COOH-Gruppe enthalten, mit der Maßgabe, dass pro Molekül mindestens eine freie OH-Gruppe vorhanden sein muss,
wobei folgende Maßgabe gilt:
(i) die Verbindungen a) und b) werden im Äquivalentverhältnis NCOₐ₎ : OH_{b)} von 1 : (1,15 bis 2,05) eingesetzt.

2. Verwendung nach Anspruch 1, wobei die Polyurethane erhältlich sind durch Umsetzung von
(a) ein oder mehreren, mindestens difunktionellen, Isocyanaten,
(b) ein oder mehreren organischen Verbindungen, die mindestens eine ethoxilierte OH-, NH-, SH- oder COOH-Gruppe enthalten, mit der Maßgabe, dass pro Molekül mindestens eine freie OH-Gruppe vorhanden sein muss, und
(c) ein oder mehreren - von (a) und (b) verschiedenen - Verbindungen, die mindestens eine gegenüber Isocyanaten reaktive funktionelle Gruppe mit Zerewitinoff-aktivem Wasserstoff (ZH) enthalten,
wobei folgende Maßgaben gelten:
(i) die Verbindungen a) und b) werden im Äquivalentverhältnis NCOₐ₎ : OH_{b)} von 1 : (1,15 bis 2,05) eingesetzt,
(ii) die Verbindungen a) und c) werden im Äquivalentverhältnis NCOₐ₎ : ZH_{c)} von 1 : 1 eingesetzt,
(iii) die Verbindungen a), b) und c) werden im Äquivalentverhältnis NCOₐ₎ : Summe (OH_{b)} +ZH_{c)}) von mindestens 1,05 : 1 eingesetzt.

3. Verwendung nach Anspruch 1 oder 2, wobei die Verbindungen b) Polyethylenglykole sind, wobei das H-Atom einer der beiden terminalen OH-Gruppen gewünschtenfalls durch einen Alkylrest ersetzt sein kann.

4. Verwendung nach einem der Ansprüche 1 bis 3, wobei die Verbindungen c) solche sind, deren gegenüber NCO reaktive funktionelle Gruppe ZH ausgewählt ist aus der Gruppe OH, NH, SH, COOH.
